# EUROPEAN PATENT SPECIFICATION

(11) **EP 0 478 847 B1**
(45) Date of publication and mention of the grant of the patent: **19.07.1995**
(21) Application number: 90202597.2
(22) Date of filing: 29.09.1990
(51) Int. Cl.: A01D 41/12

(54) **Combine harvester grain tank unloading apparatus**
Entleerungsvorrichtung für den Sammelbehälter eines Mähdreschers
Dispositif pour le vidage du réservoir à grain d'une moissonneuse-batteuse

(43) Date of publication of application: 08.04.1992
(73) Proprietor: NEW HOLLAND BELGIUM N.V., B-8210 Zedelgem (BE)
(72) Inventor: Naaktgeboren, Adrianus, B-8210 Zedelgem, Veldegem (BE); Vansteelant, Marc G., B-8210 Zedelgem (BE); Lippens, Christiaan A.G., B-9980 Sint-Laureins (BE)
(74) Representative: Vandenbroucke, Alberic

(56) References cited:
- EP-A- 0 109 518
- EP-A- 0 183 870
- EP-A- 0 274 761
- DE-A- 2 619 763
- US-A- 4 093 087
- US-A- 4 662 812

## Description

The present invention relates to combine harvesters and is concerned with the design of unloading tubes by which the grain tanks of such harvesters are unloaded.

It is known to provide a combine harvester with a pivotally mounted unloading tube which, for transport purposes, is positioned in the longitudinal direction of the harvester and which, for unloading the grain tank, can be pivoted to a generally transverse position with respect to the longitudinal dimension of the machine. The grain tank usually is installed on top of the harvester body comprising threshing and separating means as well as cleaning means. The grain tank outlet to which the unloading tube is pivotally coupled, normally is provided in a grain tank side wall generally at the lower end thereof. All this implies that the grain tank outlet and the unloading tube inlet communicating therewith usually are positioned at a given height above the ground level which is less than the average height of grain trucks or trailers into which grain is to be unloaded.

Accordingly, and as is conventional, the unloading tube usually is pivotally mounted on the combine harvester in a manner such that, as it is pivoted from its generally horizontal transport position to its transverse unloading position, it is inclined upwardly at an angle of about 30-35° to the horizontal whereby an average length unloading tube has its discharge end, in the unloading position, at an ideal height of about 4 to 4,5 meters above the ground level which, as such, is sufficient for avoiding that a grain truck or trailer would foul the unloading tube during unloading of tee grain tank content in this truck or trailer.

To enable this raising movement of the unloading tube outlet, the unloading tube may be mounted for pivotal movement around a pivot axis which is inclined both inwardly and forewardly with respect to the machine and as seen in the upward direction. Such a grain tank unloading arrangement may have a pair of unloading augers, one of which forms a grain tank bottom auger extending within the grain tank and the other one of which is positioned within the unloading tube. Both of said augers may be drivingly coupled to each other by a pair of universal joints disposed at the opposite sides of the plane defined by the pivotal mounting of the unloading tube and which, in turn, drivingly are interconnected by telescopic shafts. Such a grain tank unloading arrangement is shown in US-A-4.093.087 and is found to be advantageous in many respects. Indeed, it is very simple in design and inexpensive to manufacture and further it also has a high unloading capacity at a limited power requirement while that damage caused to the grain during unloading is very minimal if not totally inexistent.

Yet, this type of unloading tube nevertheless also may be found to equally have a drawback in as much as, because of the aforementioned inclination of 30 to 35° relative to the horizontal of the entire unloading tube, this tube still may foul a grain truck or trailer during unloading if this truck or trailer inadvertently is manoeuvred too close to the harvester. This risk mainly exists when on-the-go grain tank unloading is done, which is a practice which is becoming more popular all the time.

A complicated and expensive solution to the above depicted problem is already known in the art and is formed by the so-called "over-top" unloading tubes such as shown in EP-A-0.109.518, corresponding to the preamble of Claim 1, and CA-A-972.577. These unloading tubes comprise a first portion which is oriented generally upright and usually extends within the grain tank from a lower grain receiving position therein to an elevated position generally above the grain tank top where it communicates via a generally right angle bend or other sharp transition to a further portion, which, in the unloading position, is swung transversely and is oriented generally horizontally or nearly horizontally. This portion thereby is positioned with its entire length at the desirable average unloading height above the ground so that the aforedescribed problem, i.e. the risk for interference between the unloading tube and a grain trailer or truck is eliminated.

However, such unloading tubes have other disadvantages and one such disadvantage resides in the fact that such unloading tubes have many more parts, are more complicated in design and have a much longer overall length, which are all so many reasons why these unloading tubes are much more expensive. As an example, such unloading tubes often require the provision of gearboxes or other complicated drive means at the transitions between, on the one hand, the grain tank and the upright unloading tube portion and, on the other hand, this upright unloading tube portion and the boom or horizontal unloading tube portion, to drive the various conveyor augers therein. These gearboxes or other complicated drive means are quite expensive and furthermore, if provided within the path of the crop flow, impede this crop flow.

On top of all this, the generally upright orientation of the unloading tube first portion has a major negative effect on the capacity of the unloading tube. Also, the generally right angle bends at, on the one hand, the transition between the grain tank and the unloading tube and, on the other hand, the "elbow" of the unloading tube, not only impair the smooth flow of material through the system but also cause damage to the grain. All foregoing together also is responsible for an over-top unloading tube having substantially larger power requirements than an unloading tube of the type illustrated in US-A-4.093.087 to which reference already has been made.

It is therefore the objective of the present invention to provide a combine harvester with a new unloading system which combines the advantages of both aforedescribed prior art systems while eliminating the disadvantages thereof.

This is accomplished with a grain tank unloading arrangement according to the invention described and illustrated hereinafter in the detailed description and the drawings and as identified in the accompanying claims.

A combine harvester according to the invention will now be described, by way of example, with reference to the accompanying drawings, in which :
Figure 1 is a schematic elevation of such a combine harvester with a grain tank and an unloading tube, this unloading tube being shown in the inoperative transport position generally longitudinally of the machine.
Figure 2 shows, on a larger scale, a schematic sectional view on the line II-II of Figure 1, but with the unloading tube in a preferred 90° unloading position.

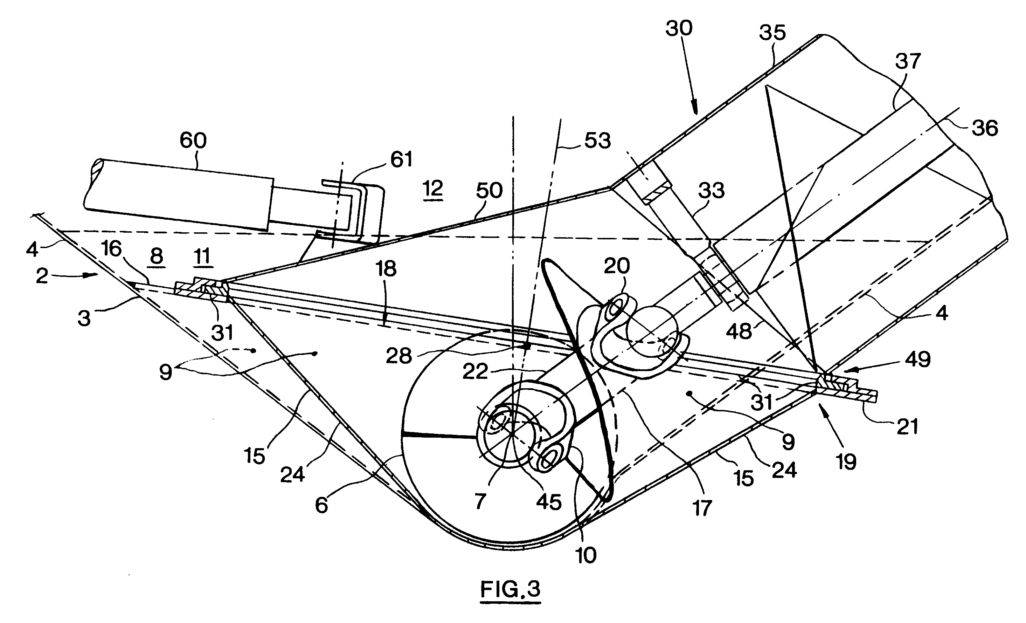

Figure 3 is a schematic sectional view on the line III-III of Figure 2, but showing the unloading tube in the transport position.
Figure 4 is a partial sectional view of the upper elbow part of the unloading tube according to the invention.

In the following description, terms such as "forward", "rearward", "left", "right" etc... are used which are words of convenience and which are not to be construed as limiting terms.

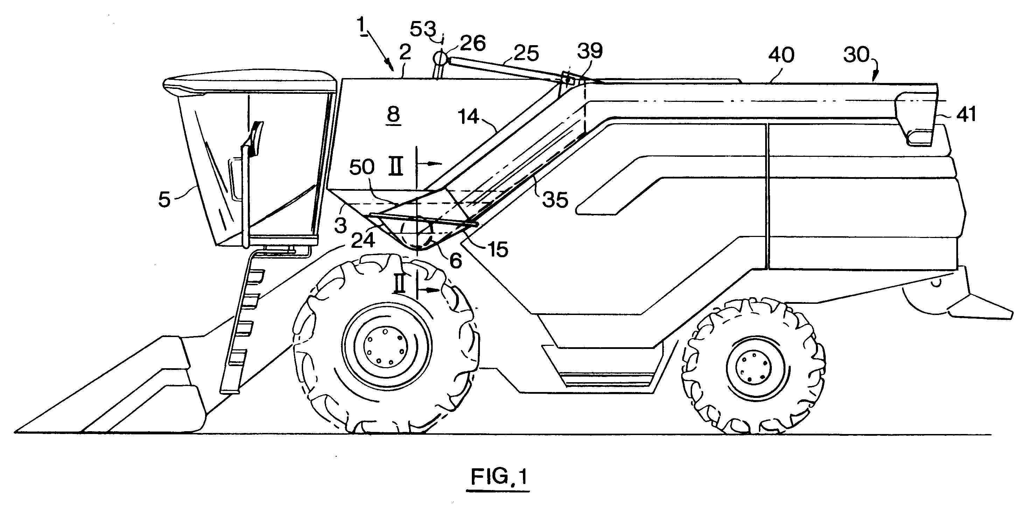

With reference to Figure 1, the combine harvester 1 according to the invention comprises a grain tank 2 having a transverse trough-shaped lower section 3 containing, along the lower part thereof, a transverse grain tank unloading conveyor 6 which preferably is in the form of a grain tank bottom auger. The grain tank 2 further also comprises transversely opposite side walls, one of which is indicated at 8 in the drawings and has a lowermost generally vertical section 11 connected to a section 12 which is inclined transversely outwardly in the upward direction. The lower vertical section 11 comprises an outlet 9 through which the bottom auger 6 extends and which communicates with an unloading tube mount 15 positioned generally vertically beneath the outwardly inclined side wall portion 12.

The unloading tube mount 15 comprises a generally trough-shaped body 24 which, at one end, communicates with the bottom end of the trough-shaped lower section 3 of the grain tank 2 through the grain tank outlet 9. The mounting 15 further also comprises a flat top wall 16 which extends generally transversely and is inclined slightly downwardly in the rearward direction. This inclination preferably is in the range of 8°. This top wall 16 is positioned generally at or slightly above the level of the upper edge of the grain tank bottom auger 6. In other words, as seen in side view, the bottom auger 6 is positioned generally beneath the level of the outlet 18 of the unloading tube mount 15.

Said top wall 16 comprises, adjacent its outboard end, a generally circular outlet 18 of a diameter which, in the preferred embodiment, substantially exceeds the diameter of the bottom auger 6. Appropriate mounting means 21, preferably in the form of a mounting collar, are associated with the outlet 18 in the top wall 16 for hingeably receiving a mounting flange 31 of an unloading tube 30 and thus, the hinge plane of the unloading tube 30 substantially coincides with, or is positioned proximate to and parallel with the top wall 16 of the unloading tube mount 15.

The shape of the unloading tube mount 15 further is such that, when seen in front view, the generally vertically oriented grain tank outlet 9 gradually passes into the generally upwardly facing circular outlet 18 of this mount 15. Also the mount 15 pretty much forms a sideward extension of the bottom end of the through-shaped lower section 3 of the grain tank 2, which, as seen in side view, is twisted relative to this section 3 over a small angle of preferably in said range of 8°.

The unloading tube 30 is angled in shape with an upwardly inclined first portion 35 and a boom or main portion 40 fixedly connected thereto at an angle which preferably is in the range of 143°. The upwardly inclined first portion 35 is hingeably supported on the unloading tube mount 15 preferably via the intermediary of an oblique and truncated cone 50 which, for this purpose, is provided at its base with the flange 31 already mentioned.

A hydraulic cylinder 60 is provided between the combine harvester chassis and an anchorage point 61 on the truncated and oblique cone 50; the arrangement being such that the unloading tube 30 can be swung thereby from its inoperative position generally alongside the harvester main body in a forward direction to any one of a range of generally transverse operative positions. In the preferred embodiment, the unloading tube 30 can swing through an arc in the range of 120° whereby, in the forewardmost position, the outlet end 41 of the unloading tube 30 is positioned more-or-less in side alignment with the combine cab 5 whereby it is easy for the operator to watch this outlet end 41 during unloading.

To assure the stability of the unloading tube arrangement according to the invention, a tie rod 25 is provided which extends generally from the elbow 39 of the unloading tube 30 to an anchorage point 26 adjacent the top end of the grain tank side wall 8 and to which said tie rod 25 is hingeably attached. It will be appreciated that the hinge of the tie rod 25 should be positioned on the pivot axis 53 of the unloading tube 30.

It is to be noted that this pivot axis 53 extends through the center 28 of the outlet 18 in the unloading tube mount 15 and perpendicular to the plane defined by said outlet 18. Thus, as seen in the fore-and-aft direction of the machine, this pivot axis 53 is inclined rearwardly with respect to the vertical over a small angle which preferably is in said range of 8°. This pivot axis 53 itself defines, together with the axis 36 of the first portion 35 of the unloading tube 30, an acute angle of preferably within the range of 45°. In other words, when the unloading tube 30 is positioned in its inoperative position generally in the fore-and-aft direction of the harvester, the first portion 35 of the unloading tube 30 is inclined relative to the vertical by an angle of about 53° which, as it happens, basically corresponds to the inclination of the trough-shaped wall portions 4 of the grain tank 1; this inclination being set by the requirement for grain to smoothly and without any hesitation slide downwardly therealong during unloading. In this connection, it will be noticed from Figure 1 that the orientation of the unloading tube first portion 35 permits this portion 35 to be positioned rearwardly of a correspondingly inclined grain tank wall portion 14 when the unloading tube 30 is in its inoperative transport position. This, in turn, permits the grain tank 2 to have the maximum possible width within the outer contours of the machine which thus is advantageous for the holding capacity of the grain tank 2.

As can be seen in Figure 1, the main or boom portion 40 of the unloading tube 30 extends generally horizontally in the fore-and-aft direction of the machine and generally at the top end thereof when this unloading tube 30 is in the inoperative transport position. This is basically similar to the arrangements of known so-called over-top unloading tubes and is advantageous in as much as the entire boom portion 40 of the unloading tube 30 is always positioned at a substantial height above the ground.

It further also will be appreciated from what precedes that, when the unloading tube 30 is swung to an operative position, the boom portion 40 thereof actually is inclined upwardly in the transverse direction by virtue of the inclination of the pivot axis 53 in the rearward direction; this inclination being advantageous in as much as the outlet end 41 of the unloading tube 30 thereby is lifted to an even larger clearance above the ground. In the preferred embodiment the boom portion 40 of the unloading tube 30 is inclined upwardly at an angle in said range of 8° when said tube 30 has been pivoted to an operative position.

Also, in as much as the unloading tube 30 is angled in shape, the entire main portion 40 is positioned at a substantial clearance above the ground which is very much the same as with known so-called over-top unloading tubes and which is advantageous for facilitating unloading in high body trailers without having to fear any interference of the unloading tube 30 with the sidewalls of such trailers. This is particularly true during on-the-go unloading of the grain tank 2.

Further, the inclination of the unloading tube first portion 35 with about 45° relative to the pivot axis 53 equally is very advantageous in as much as thereby the reach of the unloading tube 30 in its operative position is substantially increased without however increasing, to any noticeable degree, the risks for the unloading tube 30 to interfere with the adjacent trailer side wall during unloading in a high body grain trailer. Increasing the reach of an unloading tube, of course, is advantageous for further facilitating the unloading operation.

Turning now to the conveyor means within the unloading tube arrangement, these are very simple in design and preferably are formed by a plurality of, what could be called, in-line augers 6, 17, 37 and 42 in as much as these augers all are coupled the one to the other by universal joints 10, 20, 46 and 47. Motive power is supplied to these conveyor means by a conventional drive arrangement (not shown) coupled to the end of the bottom auger 6 facing away from the unloading tube 30.

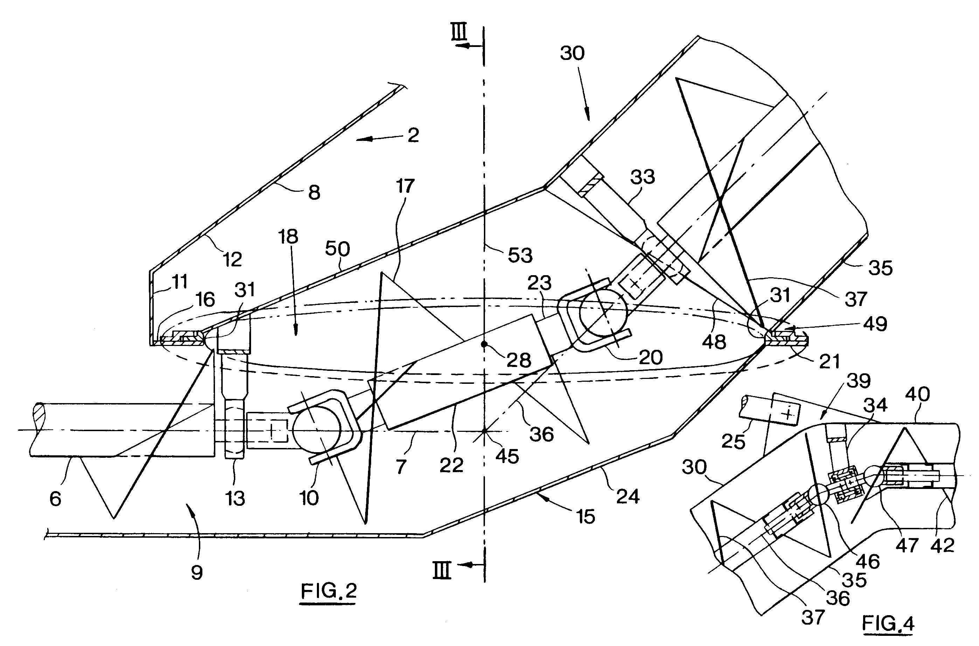

The bottom auger 6 is supported at a fixed position in the grain tank 2 via bearing arrangements, one of which is shown at 13 in Figure 2 and is coupled to the auger 37 in the unloading tube first portion 35 via the intermediary of a pair of homokinetic universal joints 10 and 20 which themselves drivingly are interconnected by a pair of telescopic drive shafts 22 and 23, one of which supports auger flights to form a stub auger 17. The auger 37 is mounted at a fixed position within the unloading tube first portion 35 by bearing arrangements 33 and 34.

From what precedes it thus will be appreciated that the universal joints 10 and 20 equally are fixedly positioned relative to respectively the grain tank 2 and the unloading tube first portion 35. As a matter of fact, the first universal joint 10 is positioned within the unloading tube mount 15 at a substantial distance beneath the outlet 18 thereof and the universal joint 20 is located within the truncated and oblique cone 50 at a short distance above said outlet 18. As a consequence, a major portion of the telescopic shafts 22, 23 and of the stub auger 17 formed thereon is positioned within the unloading tube mount 15 with only a minor portion of the auger flights of the stub auger 17 projecting into the aforementioned cone 50. It will be appreciated that, because of the particular geometry of the various components at the transition between the grain tank 2 and the unloading tube 30, the distance between the facing ends of the augers 6 and 37 varies as the unloading tube 30 is pivoted and this is why the telescopic shafts 22, 23 are provided.

The axis 7 of the bottom auger 6, the axis 36 of the auger 37 within the unloading tube first portion 35 and the pivot axis 53 preferably intersect each other at one point 45 which is positioned at a distance beneath the outlet 18 of the unloading tube mount 15. This thus also implies that the axis 36 of the unloading tube first portion 35 eccentrically intersects the outlet 18 of the unloading tube mount 15. It will be appreciated that, in this arrangement, the universal joints 10 and 20 truely operate homokinetically in all positions of the unloading tube 30 inclusive even in the transport position thereof. In other words, there is no need for any safety device to prevent engagement of the drive to the unloading tube 30 when the latter is in the transport position as this would not lead to any damage. The foregoing further also is advangeous in as much as, whatever the position of the unloading tube 30 is, the universal joints 10 and 20, during operation, do not give rise to any vibration.

Alternatively, only the axis 7 of the bottom auger 6 and the axis 36 of the auger 37 within the unloading tube first portion 35 may be positioned to intersect each other while that the pivot axis 53 may be offset relative to this intersection of the auger axes 7 and 36.

Turning now to the unloading tube boom portion 40, the auger 42 therein receives motive power from the auger 37 in the unloading tube first portion 35 via the intermediary of a pair of homekinetic universal joints 46 and 47 which firmly are held in position by the bearing arrangement 34 already mentioned. Said bearing arrangement 34 together with a bearing at the outlet 41 of the unloading tube 30 thus also holds the auger 42 at a fixed position in said boom portion 40.

The auger 37 and the unloading tube first portion 35 preferably have a somewhat greater capacity then the bottom auger 6 and, to this end and taking into account that the unloading tube first portion 35 is inclined upwardly while that the bottom auger 6 extends horizontally (the upward inclination affects the capacity negatively), the diameters of the auger 37 and the unloading tube first portion 35 are made substantially larger than the diameter of the bottom auger 6. Similarly, the auger 42 and the unloading tube main portion 40 preferably also have a capacity which slightly exceeds the capacity of the auger 37 and the associated unloading tube first portion 35. Taking into account that the unloading tube main portion 40 extends generally horizontally, i.e. has only a minimal upward inclination in the operative position of the unloading tube 30, this may be accomplished with the unloading tube main portion 40 and the associated auger 42 nevertheless having somewhat smaller diameters than the unloading tube first portion 35 and the associated auger 37, albeit that the diameters of these former parts 40 and 42 indeed must be larger than the diameter of the bottom auger 6.

Alternatively or additionally, the pitches of the sucessive augers may differ from each other in a manner to obtain or contribute to obtaining the characteristic of each one auger having a slightly greater capacity than the next preceding auger. As will be appreciated, having a series of augers with progressively increasing capacity as seen in the direction of the flow of material therethrough, is advantageous for obtaining a high capacity unloading system which furthermore requires less horsepower to operate and is less prone to plugging. This further also contributes to reducing damage caused to the grain during unloading.

Turning back once more to the truncated and oblique cone 50, this part is connected to the first portion 35 of the unloading tube 30 in a manner such that, when the unloading tube 30 is in its inoperative transport position, the lower point 49 of the intersection 48 between these two portions 35 and 50 is positioned generally at or proximate to the rearward point 19 of the outlet 18 of the unloading tube mount 15.

The above described geometry and relative positioning of the bottom auger 6, the outlet opening 18 of the unloading tube mount 15 and the unloading tube first portion 35 together with the diameters of the bottom auger 6 and the unloading tube first portion 35, to a great extent, determine the diameter of said outlet opening 18. In case of the preferred embodiment with all three axes 7, 36 and 53 having said one point of intersection 45, the diameter of said outlet 18 of the unloading tube mount 15 necessarily is quite large when compared to the dimensions of the other parts of the unloading system. On the one hand, this is advantageous in as much as this outlet 18 and the associated truncated and oblique cone 50 will not form a bottleneck for the throughpassage of grain. However, on the other hand, this oversize transition between the grain tank 2 and the unloading tube 30 may be found to also constitute a drawback in as much as it increases the overall width of the harvester. In this connection, it will be appreciated that, if the pivot axis 53 is shifted inwardly of the combine harvester and with respect to the aforementioned point of intersection, i.e. when the pivot axis 53 no longer passes through the point of intersection of the axes 7 and 36 of the augers 6 and 37, the diameter of the outlet 18 can be kept smaller without having to change the diameters of the associated components such as the bottom auger 6 and the auger 37. This thus also has a corresponding effect on the dimensions of the truncated and oblique cone 50 which equally will be smaller.

In operation, the hydraulic cylinder 60 is actuated to pivot the unloading tube 30 from its transport position to any one of a range of unloading positions in all of which the main portion 40 of the unloading tube 30 extends generally laterally of the combine harvester generally at the level of the top end of the machine and at a slight upward inclination with respect to the horizontal, the result being that a grain trailer or truck conveniently can be positioned alongside the harvester and underneath the unloading tube outlet 41 without having to fear any interference between the unloading tube 30 and any part of said trailer or truck. Indeed, the unloading tube 30 has a sufficient sideward reach while that the first and generally upwardly inclined portion thereof is positioned proximate to the body of the harvester and within the area delimited by the adjacent end of the header of the harvester; said header normally preventing the grain trailer or truck to enter into this area alongside the combine harvester body.

In use and with the unloading tube 30 in the operative position, the grain tank bottom auger 6 is driven and, in turn, drives the augers 17, 37 and 42 via the intermediary of the universal joints 10, 20, 46 and 47 and the telescopic shafts 22 and 23 so that the grain contained in the grain tank 2 is conveyed smoothly from the grain tank 2 to the trailer or truck without any sharp bend and any substantial obstructions being met.

Thus, the grain tank unloading system according to the invention and the drive therefore are very simple in design as well as in use and hence also are very inexpensive to manufacture. Also, maintenance and eventual repair costs are low because of the simple design. The various augers can be driven in all positions of the unloading tube 30 without any risk for damage so that no safety clutch or other safety provision is required as is the case in some known designs.

Also, the capacity of the unloading system according to the invention is quite high and the power requirements thereof are quite low because, on the one hand, this system does not include any vertical auger system and, on the other hand, also does not comprise any right angle "elbows" or transition zones. These characteristics further also reduce the risks for damage such as crackage being caused to the grain during unloading. Finally, for a given sideward reach, the total length of the path of the grain flow through the system according to the invention is shorter than through the known overtop systems.

From the foregoing, a person skilled in the art can fully appreciate the various advantages set forth by the present invention and it will be apparent that various changes may be made in the form, construction and arrangement thereof without departing from the spirit and scope of the invention or sacrificing all of its material advantages, the form hereinbefore described being merely a preferred or exemplary embodiment thereof.

## Claims

1. A combine harvester (1) having a grain tank (2) and grain tank unloading means; the latter comprising :
- first conveyor means (6) within the grain tank (2) for conveying grain contained therein to an outlet (9) thereof;
- an unloading tube mount (15) in grain receiving relationship with the grain tank outlet (9) and having a generally upwardly facing outlet (18);
- an angled unloading tube (30) including, on the one hand, a generally upwardly inclined first portion (35) having a lower end hingeably connected to the unloading tube mount (15) in grain receiving relationship with the outlet (18) thereof and, on the other hand, a generally horizontally extending boom portion (40) coupled at one of its ends at an obtuse angle to the other end of the unloading tube first portion (35) and having an outlet (41) generally at its other end; said unloading tube (30) being pivotable, around a pivot axis (53) extending perpendicularly to said mount outlet (18) at the center (28) thereof, between a transport position in which its boom portion (40) extends generally longitudinally of the harvester (1) and an operative unloading position in which said boom portion (40) extends generally transversely to said transport position; and
- second and third conveyor means (37, 42) extending within respectively the unloading tube first portion (35) and boom portion (40); and
characterized in that :
the axis (36) of the unloading tube first portion (35) is inclined with respect to the pivot axis (53) of the unloading tube (30).

2. A combine harvester according to claim 1, characterized in that :
- the pivot axis (53) of the unloading tube (30) is inclined rearwardly with respect to the vertical.

3. A combine harvester according to claim 2, characterized in that the rearward inclination of the pivot axis (53) of the unloading tube (30) with respect to the vertical is in the range of 8°.

4. A combine harvester according to any of the preceding claims, characterized in that the angle of inclination between the pivot axis (53) of the unloading tube (30) and the axis (36) of the unloading tube first portion (35) is in the range of 45°.

5. A combine harvester according to any of the preceding claims, characterized in that the axis (36) of the unloading tube first portion (35) eccentrically intersects the outlet (18) of the unloading tube mount (15).

6. A combine harvester according to any of the preceding claims, characterized in that :
- the grain tank outlet (9) is oriented generally vertically; and
- the unloading tube mount (15) has a generally trough-shaped body portion (24) with a generally flat top wall (16) containig the outlet (18) of said mount (15); said top wall (16) extending generally transversely and being inclined downwardly in the fore-and-aft direction and said body portion (24) being shaped and extending away from the grain tank outlet (9) in a manner so that said grain tank outlet (9) gradually passes into said generally upwardly facing outlet (18) in said top wall (16) of the unloading tube mount (15).

7. A combine harvester according to claim 6, characterized in that the hinge plane of the hingeably mounted unloading tube (30) generally coincides with the outlet (18) in the unloading tube mount (15) and the angle of inclination of the top wall (16) of this mount (15) with respect to the horizontal in the fore-and-aft direction is in the range of 8°.

8. A combine harvester according to any of the preceding claims, characterized in that the unloading tube first portion (35) is hingeably coupled to the unloading tube mount (15) via the intermediary of a truncated and oblique cone (50), the base of which has a diameter which is larger than the diameter of the unloading tube first portion (35) and which hingeably is connected to said mount (15) in material receiving relation to the outlet (18) therein.

9. A combine harvester according to any of the preceding claims, characterized in that the first, second and third conveyor means are in the form of augers (6, 37 and 42) which drivingly are coupled the one to the other by universal joint means (10, 20, 46 and 47) and which receive motive power from drive means associated with one end of the first auger (6).

10. A combine harvester according to claim 9, characterized in that the first auger (6) has one end extending through the grain tank outlet (9) into the unloading tube mount (15) and drivingly coupled to the second auger (37) in the unloading tube first portion (35) via the intermediary of a pair of universal joints (10, 20) disposed at opposite sides of the outlet (18) of the unloading tube mount (15) and themselves interconnected by telescopic shafts (22, 23).

11. A combine harvester according to claim 10, characterized in that auger flight means (17) are mounted on one of said telescopic shafts (22, 23).

12. A combine harvester according to claim 10 or 11, characterized in that the axes (7 and 36) of the first and second augers (6 and 37) intersect each other at a point (45) spaced beneath the outlet (18) of the unloading tube mount (15) and positioned withing said mount (15).

13. A combine harvester according to claim 12, characterized in that the pivot axis (53) of the unloading tube (30) also passes through said intersection point (45).

14. A combine harvester according to claim 12, characterized in that the pivot axis (53) is offset relative to said intersection point (45).

15. A combine harvester according to any of the claims 9 to 14, characterized in that, as seen in the transverse direction, the first auger (6) is positioned generally beneath the level of the outlet (18) of the unloading tube mount (15).

16. A combine harvester according to any of the claims 9 to 15, characterized in that the second and third augers (37 and 42) are drivingly coupled to each other by a pair of universal joints (46 and 47) disposed generally at the intersection between the unloading tube boom portion (40) and the unloading tube first portion (35).

17. A combine harvester according to any of the preceding claims characterized in that the pivot axis (53) of the unloading tube (30) is positioned within a vertical plane which is parallel to the longitudinal axis of the harvester.

## Patentansprüche

1. Mähdrescher (1) mit einem Körnertank (2) und Körnertank-Entleerungseinrichtungen, wobei die letzteren folgendene Teile umfassen:
- eine erste Fördereinrichtung (6) innerhalb des Körnertanks (2) zum Fördern der darin enthaltenen Körner zu einem Auslaß (9) des Körnertanks,
- eine Entleerungsrohr-Befestigung (15) in körneraufnehmender Beziehung mit dem Körnertank-Auslaß (9), wobei die Befestigung (15) einen allgemein nach oben gerichteten Auslaß (18) aufweist,
- ein abgewinkeltes Entleerungsrohr (30), das einerseits einen allgemein nach oben geneigten ersten Abschnitt (35) mit einem unteren Ende, das gelenkig mit der Entleerungsrohr-Befestigung (15) in körneraufnehmender Beziehung mit deren Auslaß verbunden ist, und andererseits einen sich allgemein horizontal erstreckenden Auslegerabschnitt (40) einschließt, der an einem seiner Enden unter einem stumpfen Winkel mit dem anderen Ende des ersten Abschnittes (35) des Entleerungsrohres verbunden ist und einen Auslaß (41) allgemein an seinem anderen Ende aufweist, wobei das Entleerungsrohr (30) um eine Schwenkachse (53), die sich senkrecht zu dem Auslaß (18) der Befestigung an deren Mittelpunkt (20) erstreckt, zwischen einer Transportstellung, in der sich der Auslegerabschnitt (40) des Entleerungsrohres allgemein in Längsrichtung des Mähdreschers (1) erstreckt und einer Entleerungs-Betriebsstellung verschwenkbar ist, in der sich der Auslegerabschnitt (40) allgemein quer zu der Transportposition erstreckt, und
- zweite und dritte Fördereinrichtungen (37,42) die sich in dem ersten Abschnitt (35) des Entleerungsrohres beziehungsweise im Auslegerabschnitt (40) erstrecken,
- dadurch gekennzeichnet, daß die Achse (36) des ersten Abschnittes (35) des Entleerungsrohres gegenüber der Schwenkachse (53) des Entleerungsrohres (30) geneigt ist.

2. Mähdrescher nach Anspruch 1, dadurch gekennzeichnet, daß:
- die Schwenkachse (53) des Entleerungsrohres (30) gegenüber der vertikalen nach hinten geneigt ist.

3. Mähdrescher nach Anspruch 2, dadurch gekennzeichnet, daß die nach hinten gerichtete Neigung der Schwenkachse (53) des Entleerungsrohres (30) bezüglich der vertikalen im Bereich von 8° liegt.

4. Mähdrescher nach einem der vorhergehenden Ansprüche, dadurch gekennzeichnet, daß der Neigungswinkel zwischen der Schwenkachse (53) des Entleerungsrohres (30) und der Achse (36) des ersten Abschnittes (35) des Entleerungsrohres im Bereich von 45° liegt.

5. Mähdrescher nach einem der vorhergehenden Ansprüche, dadurch gekennzeichnet, daß die Achse (36) des ersten Abschnittes (35) des Entleerungsrohres den Auslaß (18) der Entleerungsrohr-Befestigung (15) exzentrisch schneidet.

6. Mähdrescher nach einem der vorhergehenden Ansprüche, dadurch gekennzeichnet, daß:
- der Körnertank-Auslaß (9) allgemein vertikal gerichtet ist, und
- die Entleerungsrohr-Befestigung (15) einen allgemein wannenförmigen Hauptteil (24) mit einer allgemein ebenen oberen Wand (16) aufweist, die den Auslaß (18) der Befestigung (15) enthält, wobei die obere Wand (16) sich allgemein in Querrichtung erstreckt und in der Vorwärts-Rückwärts-Richtung nach unten geneigt ist, und wobei der Hauptteil (24) so geformt ist und sich so von dem Auslaß (9) des Körnertanks fort erstreckt, daß der Auslaß (9) des Körnertanks graduell in den nach oben gerichteten Auslaß (18) in der oberen Wand (16) der Entleerungsrohr-Befestigung (15) übergeht.

7. Mähdrescher nach Anspruch 6, dadurch gekennzeichnet, daß die Gelenkebene des gelenkig befestigten Entleerungsrohres (30) allgemein mit dem Auslaß (18) in der Entleerungsrohr-Befestigung (15) zusammenfällt und daß der Neigungswinkel der oberen Wand (16) dieser Befestigung (15) bezüglich der Horizontalen in der Vorwärts-Rückwärts-Richtung im Bereich von 8° liegt.

8. Mähdrescher nach einem der vorhergehenden Ansprüche, dadurch gekennzeichnet, daß der erste Abschnitt (35) des Entleerungsrohres gelenkig mit der Entleerungsrohr-Befestigung (15) über einen abgestumpften und schräg verlaufenden Kegel (50) verbunden ist, dessen Basis einen Durchmesser aufweist, der größer als der Durchmesser des ersten Abschnittes (35) des Entleerungsrohres ist, und die mit der Befestigung (15) gelenkig in materialaufnehmender Beziehung zu dem Auslaß (18) in dieser Befestigung verbunden ist.

9. Mähdrescher nach einem der vorhergehenden Ansprüche, dadurch gekennzeichnet, daß die erste, zweite und dritte Fördereinrichtung die Form von Förderschnecken (6, 37 und 42) aufweisen, die antriebsmäßig miteinander über Universalgelenkeinrichtungen (10, 20, 46 und 47) gekoppelt sind und die Antriebsleistung von den Antriebseinrichtungen empfangen, die mit einem Ende der ersten Förderschnecke verbunden sind.

10. Mähdrescher nach Anspruch 9, dadurch gekennzeichnet, daß die erste Förderschnecke (6) ein sich durch den Körnertank-Auslaß (9) in die Entleerungsrohr-Befestigung (15) erstreckendes Ende aufweist, das antriebsmäßig mit der zweiten Förderschnecke in dem ersten Abschnitt (35) des Entleerungsrohres über zwei Universalgelenke (10,20) gekoppelt ist, die auf gegenüberliegenden Seiten des Auslasses (18) der Entleerungsrohr-Befestigung (15) angeordnet sind und ihrerseits über Teleskopwellen (22,23) verbunden sind.

11. Mähdrescher nach Anspruch 10, dadurch gekennzeichnet, daß Förderschneckenflügelteile (17) auf einer der Teleskopwellen (22, 23) befestigt sind.

12. Mähdrescher nach Anspruch 10 oder 11, dadurch gekennzeichnet, daß die Achsen (7 und 36) der ersten und zweiten Förderschnecken (6 und 37) einander an einem Punkt (45) schneiden, der mit Abstand unterhalb des Auslasses (18) der Entleerungsrohr-Befestigung (15) liegt und in dieser Befestigung (15) angeordnet ist.

13. Mähdrescher nach Anspruch 12, dadurch gekennzeichnet, daß die Schwenkachse (53) des Entleerungsrohres (30) ebenfalls durch den Schnittpunkt (45) verläuft.

14. Mähdrescher nach Anspruch (12), dadurch gekennzeichnet, daß die Schwenkachse (53) gegenüber dem Schnittpunkt (45) versetzt ist.

15. Mähdrescher nach einem der Ansprüche 9 bis 14, dadurch gekennzeichnet, daß bei Betrachtung in Querrichtung die erste Förderschnecke (6) allgemein unterhalb der Höhenlage des Auslasses (18) der Entleerungsrohr-Befestigung (15) angeordnet ist.

16. Mähdrescher nach einem der Ansprüche 9 bis 15, dadurch gekennzeichnet, daß die zweiten und dritten Förderschnecken (37 und 42) antriebsmäßig miteinander über zwei Universalgelenke (46 und 47) gekoppelt sind, die allgemein an der Schnittfläche zwischen dem Auslegerabschnitt (40) des Entleerungsrohres und dem ersten Abschnitt (35) des Entleerungsrohres angeordnet sind.

17. Mähdrescher nach einem der vorhergehenden Ansprüche, dadurch gekennzeichnet, daß die Schwenkachse (53) des Entleerungsrohres (30) in einer vertikalen Ebene angeordnet ist, die parallel zur Längsachse des Mähdreschers verläuft.

## Revendications

1. Moissonneuse-batteuse (1) ayant un réservoir à grains (2) et un dispositif de déchargement du réservoir à grains; ce dernier comprenant:
- un premier élément de transport (6) à l'intérieur du réservoir à grains (2) destiné à transporter le grain contenu dans celui-ci vers une sortie (9) de celui-ci;
- un raccord (15) du tube de déchargement de grains, mis en relation avec la sortie (9) du réservoir à grains, et ayant une sortie (18) dirigée généralement vers le haut;
- un tube de déchargement (30) coudé comprenant d'une part une première section (35) inclinée généralement vers le haut, ayant une extrémité inférieure pivotante raccordée au raccord (15) du tube de déchargement de grains mis en relation avec la sortie (18) de celui-ci, et d'autre part une section de flèche (40) reliée, en formant un angle obtus, par l'une de ses extrémités à l'autre extrémité de la première section (35) du tube de déchargement, et ayant une sortie (41) généralement à son autre extrémité; le dit tube de déchargement (30) étant monté pivotant autour d'un axe pivot (53) s'étendant perpendiculairement à ladite sortie (18) du raccord, au centre (28) de celui-ci, entre une position de transport dans laquelle la section de flèche (40) s'étend généralement le long de la moissonneuse (1), et une position opérationnelle de déchargement dans laquelle ladite section de flèche (40) s'étend généralement transversalement par rapport à ladite position de transport; et
- un second et troisième élément de transport (37, 42) s'étendant respectivement à l'intérieur de la première section (35) du tube de déchargement et de la section de flèche (40); et
caractérisée en ce que:
l'axe (36) de la première section (35) du tube de déchargement est incliné par rapport à l'axe pivot (53) du tube de déchargement (30).

2. Moissonneuse-batteuse selon la revendication 1, caractérisée en ce que:
- l'axe pivot (53) du tube de déchargement (30) est incliné vers l'arrière par rapport à la verticale.

3. Moissonneuse-batteuse selon la revendication 2, caractérisée en ce que l'inclinaison vers l'arrière de l'axe pivot (53) du tube de déchargement (30) est de l'ordre de 8° par rapport à la verticale.

4. Moissonneuse-batteuse selon l'une quelconques des revendications précédentes, caractérisée en ce que l'angle d'inclinaison entre l'axe pivot (53) du tube de déchargement (30) et l'axe (36) de la première section (35) du tube de déchargement est de l'ordre de 45°.

5. Moissonneuse-batteuse selon l'une quelconques des revendications précédentes, caractérisée en ce que l'axe (36) de la première section (35) du tube de déchargement coupe la sortie (18) du raccord (15) du tube de déchargement de manière excentrique.

6. Moissonneuse-batteuse selon l'une quelconques des revendications précédentes, caractérisée en ce que:
- la sortie (9) du réservoir à grains est orientée généralement verticalement; et
- le raccord (15) du tube de déchargement a une section de corps (24) en forme d'auge avec une paroi supérieure (16) généralement plate comprenant la sortie (18) du dit raccord (15); ladite paroi supérieure (16) s'étendant généralement transversalement et étant inclinée vers le bas dans la direction avant/arrière, et ladite section de corps (24) étant formée et s'étendant en s'écartant de la sortie (9) du réservoir à grains en manière telle que ladite sortie (9) du réservoir à grains passe graduellement dans ladite sortie (18) généralement dirigée vers le haut, dans ladite paroi supérieure (16) du raccord (15) du tube de déchargement.

7. Moissonneuse-batteuse selon la revendication 6, caractérisée en ce que le plan de pivotement du tube de déchargement (30) monté pivotant coïncide généralement avec la sortie (18) dans le raccord (15) du tube de déchargement, et l'angle d'inclinaison de la paroi supérieure (16) de ce raccord (15) par rapport à l'horizontale dans la direction avant/arrière est de l'ordre de 8°.

8. Moissonneuse-batteuse selon l'une quelconques des revendications précédentes, caractérisée en ce que la première section (35) du tube de déchargement est reliée pivotante au raccord (15) du tube de déchargement par l'intermédiaire d'un cône tronqué et oblique (50), dont la base a un diamètre qui est plus grand que le diamètre de la première section (35) du tube de déchargement, et qui est raccordée pivotante au dit raccord (15), en relation de réception du matériau à la sortie (18) dans celui-ci.

9. Moissonneuse-batteuse selon l'une quelconques des revendications précédentes, caractérisée en ce que le premier, le second et le troisième élément de transport ont la forme de vis (6, 37 et 42) qui, pour ce qui est de l'entraînement, sont reliées l'une à l'autre au moyen de joints de transmission (10, 20, 46 et 47), et qui reçoivent la puissance motrice d'un dispositif d'entraînement associé à l'une des extrémités de la première vis (6).

10. Moissonneuse-batteuse selon la revendication 9, caractérisée en ce que la première vis (6) a une extrémité qui s'étend au travers de la sortie (9) du réservoir à grains dans le raccord (15) du tube de déchargement, et qui est raccordée, pour ce qui est de l'entraînement, à la seconde vis (37) dans la première section (35) du tube de déchargement par l'intermédiaire d'une paire de joints de transmission (10, 20) disposés de côtés opposés de la sortie (18) du raccord (15) du tube de déchargement, et eux-mêmes interconnectés par des arbres télescopiques (22, 23).

11. Moissonneuse-batteuse selon la revendication 10, caractérisée en ce que les éléments à vis (17) sont montés sur l'un des dits arbres télescopiques (22, 23).

12. Moissonneuse-batteuse selon la revendication 10 ou 11, caractérisée en ce que les... que les axes (7 et 36) de la première et de la deuxième vis (6 et 37) se croisent l'un l'autre en un point (45) écarté sous la sortie (18) du raccord (15) du tube de déchargement et positionné à l'intérieur du dit raccord (15).

13. Moissonneuse-batteuse selon la revendication 12 , caractérisée en ce que l'axe pivot (53) du tube de déchargement (30) passe également au travers du dit point d'intersection (45).

14. Moissonneuse-batteuse selon la revendication 12 , caractérisée en ce que l'axe pivot (53) est décalé par rapport au dit point d'intersection (45).

15. Moissonneuse-batteuse selon l'une quelconques des revendications 9 à 14, caractérisée en ce que, lorsqu'elle est vue en direction transversale, la première vis (6) est positionnée généralement sous le niveau de la sortie (18) du raccord (15) du tube de déchargement.

16. Moissonneuse-batteuse selon l'une quelconque des revendications 9 à 15 en ce que la seconde et la troisième vis (37 et 42), pour ce qui est de l'entraînement, sont reliées l'une à l'autre par une paire de joints de transmission (46 et 47) disposés généralement à l'intersection entre la section de flèche (40) du tube de déchargement et la première section (35) du tube de déchargement.

17. Moissonneuse-batteuse selon l'une quelconques des revendications précédentes, caractérisée en ce que l'axe pivot (53) du tube de déchargement (30) est positionné dans un plan vertical qui est parallèle à l'axe longitudinal de la moissonneuse.
